**Europäisches Patentamt**

**European Patent Office**

**Office européen des brevets**

(19)

(11) Veröffentlichungsnummer: **0 150 671**
**B1**

## (12) EUROPÄISCHE PATENTSCHRIFT

(45) Veröffentlichungstag der Patentschrift:
**20.04.88**

(51) Int. Cl.⁴: **F 24 D 19/10,** G 01 K 17/06

(21) Anmeldenummer: **84810621.7**

(22) Anmeldetag: **14.12.84**

(54) **Verfahren zur Regelung einer thermischen Anlage.**

(30) Priorität: **13.01.84 CH 172/84**

(43) Veröffentlichungstag der Anmeldung:
**07.08.85 Patentblatt 85/32**

(45) Bekanntmachung des Hinweises auf die Patenterteilung:
**20.04.88 Patentblatt 88/16**

(84) Benannte Vertragsstaaten:
**AT BE DE FR GB IT LU NL SE**

(56) Entgegenhaltungen:
**EP - A - 0 001 615**
**EP - A - 0 030 995**
**DE - A - 2 452 515**
**DE - B - 2 116 525**
**DE - C - 936 167**

(73) Patentinhaber: **Huber, Jakob, Les Aveneyres,
CH-1806 St-Légier /VD (CH)**

(72) Erfinder: **Huber, Jakob, Les Aveneyres,
CH-1806 St-Légier /VD (CH)**

(74) Vertreter: **Winkler, Kurt, Dr., Mellingerstrasse 69,
CH-5400 Baden (CH)**

## Beschreibung

Die Erfindung betrifft ein Verfahren zur Regelung einer thermischen Anlage, bestehend wenigstens aus einem von einer im Kreislauf geführten Prozessflüssigkeit durchströmten thermischen Regenerator zur Aufrechterhaltung einer einstellbaren Vorlauftemperatur der Prozessflüssigkeit, aus mindestens einem über eine Vorlauf- und eine Rücklaufleitung mit dem Regenerator verbundenen, von der Prozessflüssigkeit durchströmten Wärmetauscher, und aus einer in einer der beiden Leitungen angeordneten Umwälzpumpe, deren Antriebsmotor in einem elektrischen Stromkreis liegt, ferner betrifft die Erfindung eine Einrichtung zur Durchführung des Verfahrens.

Für die Regelung einer Zentralheizungsanlage ist es heutzutage meistens üblich, die Ölfeuerung des Heizkessels mit einem eigenen Kesselthermostaten zur Aufrechterhaltung einer konstanten Vorlauftemperatur zu den Heizkörpern als ein System für sich auszubilden, wobei die Prozessflüssigkeit vorwiegend mit einer Umwälzpumpe in Zirkulation gehalten wird.

Ein auf eine bestimmte Temperatur einstellbarer Raumthermostat in einem Pilotzimmer, wofür normalerweise ein Wohnzimmer herangezogen wird, setzt ein Drosselventil oder Dreiwegventil für eine Wohneinheit in Bewegung, um die benötigte Prozessflüssigkeit in die Heizkörper durchfliessen zu lassen, sobald die Raumtemperatur unter die eingestellte Temperatur abgesunken ist. Je nach Steuerungsart wird die Pumpe wieder ausgeschaltet, wenn die gewünschte Raumtemperatur erreicht oder knapp überschritten ist. Diese Schaltvorgänge können auch durch andere Sensoren, z.B. durch einen im Freien installierten Aussenthermostaten ausgelöst werden, der auf einen beliebigen Grenzwert einstellbar ist.

Bei dieser und ähnlichen Regelungen ist nachteilig, dass die Rücklauftemperatur nach den Heizkörpern unberücksichtigt bleibt, ob sie nun hoch oder tief liegt, was in beiden Fällen bei Verwendung solcher Regelungen in einem Wohnblock ohne einen zusätzlichen Wärmezähler keine verbrauchsgerechte Aufteilung der Heizkosten auf die Mieter ermöglicht.

Nach einem anderen Verfahren zur Regelung einer Heizungsanlage (DE-A-2 452 515) wird über einen Regler ein Mischventil betätigt und der Brenner des Heizkessels eingeschaltet, sobald ein Raumthermostat Wärme anfordert. Die in der Vorlaufleitung angeordnete Umwälzpumpe arbeitet nur, wenn die von einem weiteren Thermostat kontrollierte Rücklauftemperatur innerhalb zweier einstellbarer Grenzwerte liegt. Überschreitet die Rücklauftemperatur den oberen oder unterschreitet sie den unteren Grenzwert, wird die Umwälzpumpe abgeschaltet. Eine Einwirkung der Raumtemperatur oder einer sonstigen temperaturabhängigen Führungsgrösse auf die Pumpe und somit auf den Durchfluss durch die Heizkörper ist weder beabsichtigt noch möglich. Die Pumpe arbeitet, unbeeinflusst vom tatsächlichen, oft schwankenden Wärmeverbrauch in den Heizkörpern, gleichmässig weiter, solange die Rücklauftemperatur innerhalb der beiden Grenzwerte liegt. Ein wirtschaftlicher Betrieb ist mit einer derart geregelten Anlage nicht zu erzielen.

Sieht man von der oft noch gebräuchlichen Pauschalverrechnung der Heizkosten nach der Wohnfläche ab, was den tatsächlichen Verbrauch des Einzelnen völlig ausser Acht lässt, so ist die Messung der Durchflussmenge des in einem Stockwerk oder in einer Wohnung durchgepumpten Heizungswassers die derzeit noch beste Lösung. So ist eine Zählvorrichtung zur Wärmemengenbestimmung, insbesondere für Zentralheizungen, bekannt (EP-A-0 030 995), bei welcher ein schaufelradähnlicher Rotor, der mit einem Zählwerk verbunden ist, im Transportrohr des Warmwassers angeordnet ist. Aus der durchgesetzten, im Zählwerk registrierten Wassermenge wird auf den Wärmeverbrauch geschlossen. Nachteilig ist dabei, dass zwar die durchgeflossene Heizwassermenge, aber nicht die wirklich verbrauchte Wärmemenge unter Berücksichtigung der Vor- und Rücklauftemperatur erfasst wird.

Eine Verbesserung in dieser Hinsicht ist von einer Zentralheizungsanlage mit einem selbstregelnden Durchflussventil bekannt, welches unter Berücksichtigung der Temperaturen eine konstant bleibende Heizungswassermenge hindurchlässt. Die Vor- und die Rücklauftemperatur werden in einem als Temperatur/Spannungswandler ausgebildeten Widerstandsthermometer gemessen und einem Operationsverstärker zugeführt, in welchem ein der Temperaturdifferenz entsprechendes Ausgangssignal gebildet wird. Dieses wird zu einem Spannungs/Frequenzwandler geleitet, welcher Impulse unterschiedlicher Frequenzen erzeugt, deren Anzahl summiert wird. Diese Anlage weist also lediglich eine temperaturbeeinflusste Messeinrichtung für die durchgesetzte Flüssigkeitsmenge auf und bietet keinerlei Regelmöglichkeit für den Betrieb der Anlage.

Nachteilig ist ferner die dafür notwendige, komplizierte elektrische Instrumentierung.

Bei Kälteanlagen, beispielsweise bei Klimaanlagen in der chemischen Industrie oder beim Betrieb von Kühlhäusern, treten ähnlich gelagerte Gegebenheiten und Bedingungen wie bei Heizungsanlagen auf und es werden daher die sinngemäss gleichen Anforderungen an eine zweckentsprechende Regelung gestellt.

Der Erfindung liegt die Aufgabe zugrunde, ein Regelverfahren und eine Einrichtung zur Durchführung dieses Verfahrens für eine thermische Anlage anzugeben, die einen optimal wirtschaftlichen Betrieb der Anlage erlauben unter gleichzeitiger Registrierung der im Wärmetauscher tatsächlich umgesetzten Wärmemenge.

Diese Aufgabe wird durch die kennzeichnenden Merkmale der Ansprüche 1 und 13 gelöst, wobei auch eine Kombination von den Ansprüchen 1-12 bzw. 13–20 weitere Mess- und Regelmöglichkeiten erlaubt.

Bei diesem sehr einfachen Regelsystem wirken sowohl eine Führungsgrösse als auch die Rücklauftemperatur der Prozessflüssigkeit auf den Betrieb der Umwälzpumpe ein. So wird vermieden, dass unnötigerweise oder zuviel Prozessflüssigkeit durch den Wärmetauscher gepumpt wird. Die Rücklauftemperatur wird dabei praktisch konstant gehalten.

Da es allgemein üblich ist, auch die Vorlauftemperatur konstant zu halten, genügt die Messung der gesamten Durchflussmenge der Pumpe in einer gewissen Zeitspanne, um die im Wärmetauscher umgesetzte Wärmemenge zu bestimmen, was bei entsprechender Eichung des Zählwerks auch direkt erfolgen kann.

Ein weiterer Vorteil ergibt sich, wenn die Umwälzpumpe nicht nur zu- und abschaltbar ist, sondern auch ihre Drehzahl und damit ihr Durchsatz pro Zeiteinheit gemäss dem tatsächlichen Bedarf variiert werden kann. Es ist dadurch eine noch bessere und somit wirtschaftlichere Anpassung der Anlage an die jeweiligen Heiz- oder Kühlerfordernisse möglich.

Ferner ist es zweckmässig, wenn die Umwälzpumpe mit einem Absperrventil kombiniert ist, welches bei Stillstand der Pumpe automatisch den Durchfluss der Prozessflüssigkeit absperrt. Ein ungewollter, wenn auch nur schwacher Durchfluss, z.B. durch Thermosiphonwirkung, ist dann nicht mehr möglich.

Sollten mehrere getrennt voneinander arbeitende, aber an eine gemeinsame Ablaufleitung vom bzw. Zulaufleitung zum thermischen Regenerator angeschlossene Wärmetauscher geregelt werden, dann ist es vorteilhaft, bei jedem Wärmetauscher oder jeder Wärmetauschergruppe die erfindungsgemässe Regeleinrichtung vorzusehen.

Bei einer Zentralheizungsanlage für ein mehrstöckiges Wohnhaus bedeutet das eine Regeleinrichtung für jedes Stockwerk oder sogar für jede Wohnung. Dies erlaubt eine exakte, zuverlässige Heizkostenabrechnung und sparsame Mieter müssen nicht mehr für Verschwender zahlen.

Anhand der beiliegenden Zeichnung werden nachstehend zwei Ausführungsbeispiele der Erfindung und ein Detail dazu näher beschrieben. Es zeigen:

Fig. 1 ein Regelschema als Ausschnitt aus einer Zentralheizungsanlage;

Fig. 2 eine Variante zu Fig. 1 für eine andere Heizungsanlage;

Fig. 3 eine Umwälzpumpe mit eingebautem Absperrventil.

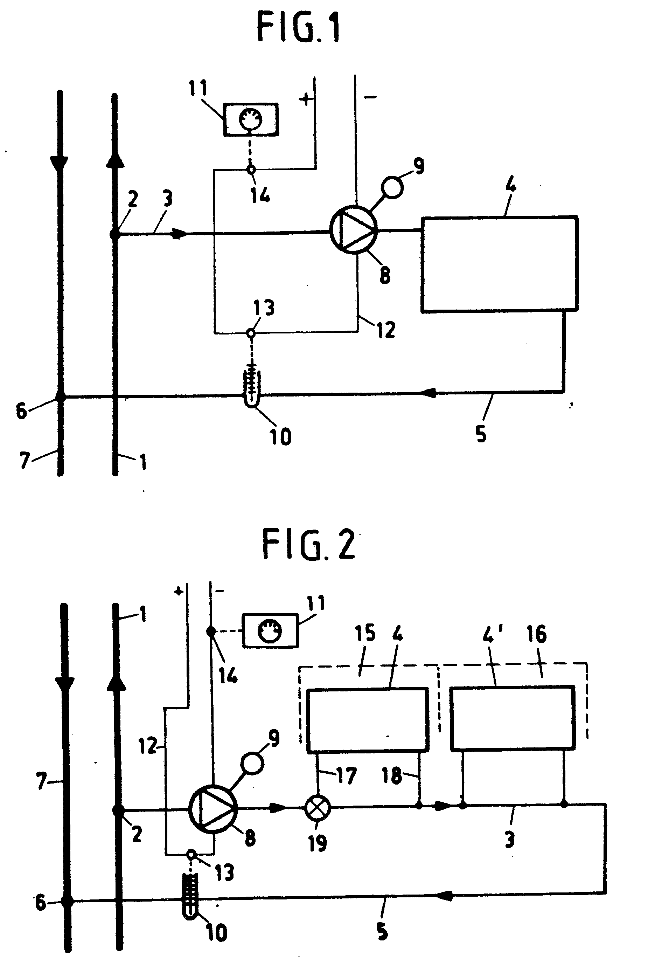

Nach Fig. 1 strömt heisses, meist auf einer konstanten Vorlauftemperatur gehaltenes Heizungswasser vom (nicht gezeichneten) Zentralheizungskessel durch die Leitung 1 zu den Verbrauchern. Im Punkte 2 zweigt die Vorlaufleitung 3 ab, die zum Wärmetauscher 4 – einem Einzelheizkörper oder eine auf mehrere Räume aufgeteilte Heizkörpergruppe – führt. Von diesem geht die Rücklaufleitung 5 ab, die im Punkte 6 in die zum Zentralheizungskessel zurückführende Ablaufleitung 7 einmündet. In der Vorlaufleitung 3 ist die Umwälzpumpe 8 angeordnet, mit welcher das Zählwerk 9 zusammengebaut ist, aber auch mechanisch oder auf eine sonstige Weise mit ihr verbunden sein kann. In der Rücklaufleitung 5 ist der erste Temperaturfühler 10 vorgesehen, z.B. ein Widerstandsthermometer oder ein Bimetallelement. In einem Pilotraum – meistens einer der beheizten Räume – ist der zweite Temperaturfühler 11 in Form eines Raumthermostaten angeordnet. Die Umwälzpumpe 8 liegt im elektrischen Stromkreis 12, mit dem auch die beiden Temperaturfühler 10 und 11 in an sich bekannter Weise über die beiden Schaltstellen 13 bzw. 14 wirkverbunden sind.

Die Temperatur im Pilotraum bildet die Führungsgrösse, für die ein Grenzwert, hier der gewünschte Sollwert der Raumtemperatur, am Raumthermostat eingestellt wird. Sobald der Sollwert durch die Aufheizung des Raumes vom Istwert der Raumtemperatur überschritten wird, unterbricht der zweite Temperaturfühler 11, also der Raumthermostat, über die zweite Schaltstelle 14 den Stromkreis 12 und die Umwälzpumpe 8 wird damit stillgesetzt. Sinkt die Raumtemperatur unter den Sollwert ab, dann schliesst der Raumthermostat den Stromkreis und die Pumpe kann wieder fördern. – Dieser Regelvorgang ist sowohl aus der Heizungs- als auch sinngemäss aus der Kältetechnik bekannt.

Trotz dieser Regelung ergibt sich, allein schon durch die der Anlage innewohnende Trägheit, eine gewisse Schwankung des Istwertes der Raumtemperatur um den eingestellten Sollwert. Bei einer normalen Raumheizung wird man beispielsweise Temperaturschwankungen von $\pm 1/2\,°C$ akzeptieren. Erst bei Erreichen dieser Toleranzgrenzen treten die temperaturabhängigen Schaltvorgänge ein. Sollten, z.B. in Laboratorien, engere Toleranzgrenzen notwendig sein, so ist dies durch entsprechende Instrumentierung ohne weiteres erreichbar.

Der beschriebene Regelvorgang wird durch einen weiteren, ähnlichen Regelvorgang überlagert, indem auch die Heizungswassertemperatur in der Rücklaufleitung 5 gemessen und zur Regelung herangezogen wird. Am Temperaturfühler 10 wird ein gewünschter Sollwert der Rücklauftemperatur eingestellt. Sobald der Istwert der Rücklauftemperatur den eingestellten Sollwert überschreitet, wird der elektrische Stromkreis 12 an der Schaltstelle 13 unterbrochen und die Umwälzpumpe bleibt stehen. Sinkt der Istwert unter den Sollwert ab, dann schliesst der Temperaturfühler 10 über die Schaltstelle 13 den Stromkreis und die Pumpe beginnt wieder zu arbeiten, natürlich nur unter der Voraussetzung, dass auch an der Schaltstelle 14 der Stromkreis geschlossen ist.

Es sei hier vermerkt, dass naturgemäss die Umwälzpumpe nur laufen kann, wenn der Stromkreis an beiden Schaltstellen geschlossen ist. Hingegen genügt das Öffnen nur einer Schaltstelle, um den Stromkreis zu unterbrechen und die Pumpe stillzusetzen. Als Sollwert für die Rücklauftemperatur wird man einen Wert wählen, der z.B. 10 °C unter der vom Heizkessel her meist konstant gehaltenen Vorlauftemperatur liegt. Auch hier muss man für die Abweichung des Istwertes vom Sollwert eine gewisse Toleranzgrenze zugestehen, bevor ein Schaltvorgang ausgelöst wird. Ist jedoch aus irgendeinem Grunde mit grösseren Schwankungen der Vorlauftemperatur zu rechnen, dann ist es zweckmässig, die Rücklauftemperatur jeweils auf eine konstante Differenz unterhalb der Vorlauftemperatur einzuregeln, wofür allerdings ein zusätzliches, eine Differenz bildendes Gerät erforderlich ist.

Durch die Einbeziehung der Rücklauftemperatur in die Regelung wird der Durchfluss durch den Heizkörper derart geregelt, dass – von kurzen Übergangsperioden, beispielsweise beim Anfahren der Anlage, abgesehen – einer Einheit des eingespeisten Heizungswassers stets die gleiche Wärmemenge entnommen wird. Bei einer Zentralheizungsanlage trifft dies für alle Mieter eines Hauses zu und damit ist die verbrauchsgerechte Aufteilung der Heizungskosten ermöglicht.

Es genügt die Messung einer einzigen Grösse, nämlich des Durchsatzes durch den Heizkörper oder, was auf das gleiche hinausläuft, der Förderleistung der Pumpe.

Zu diesem Zwecke ist die Umwälzpumpe 8 mit dem Zählwerk 9 versehen, welches die Umdrehungen, die Durchflussmenge oder bei einfachen Anlagen die Betriebsstunden der Umwälzpumpe summiert und so ein Mass für die im Wärmetauscher umgesetzten Wärmeeinheiten liefert. Das Zählwerk kann aber auch direkt auf Wärmeeinheiten geeicht sein.

Sollte jedoch die Vorlauftemperatur öfter oder grösseren Schwankungen unterworfen sein, dann ist es vorteilhaft, mittels der magnetischen Kupplung der Umwälzpumpe direkt einen Kalorienzähler anzutreiben, welcher zur Erfassung der verbrauchten Wärmemenge die Differenz zwischen Vorlauf- und Rücklauftemperatur registriert.

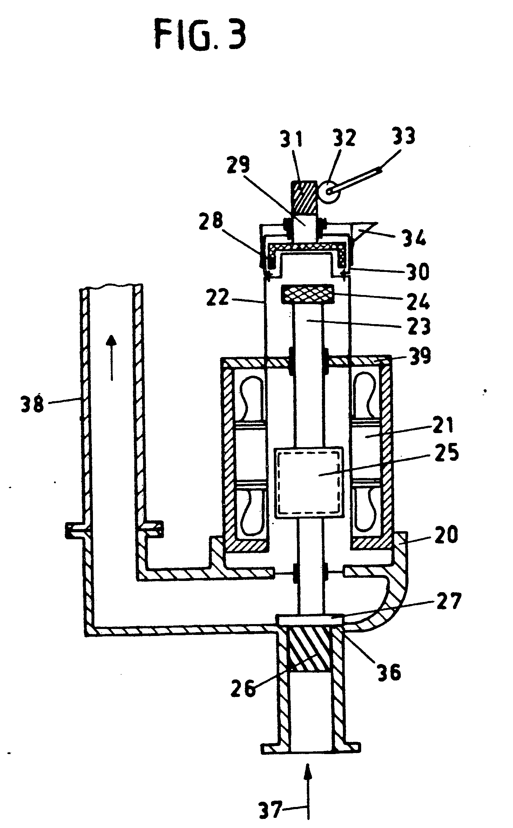

Um bei stillstehender Umwälzpumpe einen ungewollten, wenn vielleicht auch nur geringen Durchfluss durch das Heizungssystem zu vermeiden, was zu einem nicht erfassbaren Wärmeverbrauch führen würde, ist es vorteilhaft, gleichzeitig mit der Stillsetzung der Pumpe auch den Durchfluss abzusperren. Ein Ausführungsbeispiel für ein diese Eigenschaften aufweisendes Aggregat ist in Fig. 3 gezeigt.

Ein weiterer Vorteil ergibt sich, wenn der Raumthermostat mit einer Schaltuhr verbunden wird, wodurch z.B. eine Nachtabsenkung der Zimmertemperatur bewerkstelligt oder ein sonstiges Zeit/Temperatur-Programm gefahren werden kann.

Das gleiche Regelschema gemäss Fig. 1 ist auch anwendbar, wenn die Aussentemperatur als Führungsgrösse gewählt wird. In diesem Falle wird als zweiter Temperaturfühler 11 ein Aussenthermostat eingesetzt, auf welchem der gewünschte Grenzwert eingestellt wird. Sinkt die Aussentemperatur unter diesen Grenzwert ab, dann schliesst der Thermostat über die Schaltstelle 14 den Stromkreis 12 und die Umwälzpumpe 8 beginnt zu fördern, sofern auch die Schaltstelle 13 geschlossen ist. Überschreitet die Aussentemperatur den eingestellten Grenzwert, dann wird der Stromkreis bei 14 unterbrochen und die Pumpe steht still.

Eine weitere Möglichkeit besteht darin, die Differenz zwischen dem Sollwert der Raumtemperatur und der Aussentemperatur als Führungsgrösse zu wählen. Dabei ist es vorteilhaft, die Drehzahl der Umwälzpumpe in Abhängigkeit von dieser Temperaturdifferenz zu regeln, z.B. mit Hilfe einer elektronischen Drehzahlsteuerung. Bei einer solchen Regelung läuft die Pumpe nur bei grosser Kälte in der Atmosphäre und entsprechend grossem Wärmebedarf auf vollen Touren und sie wird so eingeregelt, dass die Rücklauftemperatur des Heizungswassers die gewünschte Differenz zur Vorlauftemperatur aufrechterhält. Selbstverständlich kann als Führungsgrösse auch die Temperaturdifferenz zwischen dem Ist- und dem Sollwert der Raumtemperatur oder zwischen der Aussentemperatur und dem Sollwert der Raumtemperatur oder auch die Differenz zwischen der Vorlauf- und der Rücklauftemperatur gewählt werden.

Mit Annäherung der tatsächlichen an die gewünschte Raumtemperatur dreht die Pumpe immer langsamer, bis sie bei Erreichen des Sollwertes, wie oben beschrieben, durch Unterbrechung des Stromkreises ganz abgeschaltet wird. Der Vorteil dieses Regelvorgangs besteht darin, dass die Beheizung des Raumes besser an den jeweiligen Wärmebedarf angepasst wird und damit zu kleineren Heizkörpertemperaturen führt. Die Beheizung erfolgt nicht mehr stossweise, mit maximaler Wärmeleistung, sondern mit fliessenden Übergängen, was zum Wohlbefinden der im Raume Anwesenden beiträgt. Ferner wird bei kleineren Drehzahlen ein sehr ruhiger und damit geräuschloser Lauf der Pumpe erreicht.

Eine Kombination aus den Ansprüchen 1–12 ergibt folgende Steuerungsmöglichkeit als Beispiel. Die Drehzahl und damit die Fördermenge wird durch die Differenz der Raumtemperatur und der Aussentemperatur ausserhalb des Gebäudes bestimmt.

Mit dieser Führungsgrösse wird z.B. die Temperatur in einer Wohnung geregelt.

Der Verbrauch der Wärmemenge wird nun erfasst aus der Summe der Umdrehungen der Pumpe pro Zeiteinheit und aus der Temperaturdifferenz zwischen der Vorlauf- und Rücklauftemperatur.

Mit diesem Messvorgang wird die in der Prozessflüssigkeit enthaltene Wärmemenge gemessen und gleichzeitig z.B. elektronisch addiert und kann jederzeit abgelesen werden.

Für Kälteanlagen sind die sinngemäss gleichen Regelungsarten anwendbar, doch laufen bei den vergleichbaren Temperaturänderungen jeweils die umgekehrten Schaltvorgänge ab. Das gesamte System nach Fig. 1 wird von einer Kältesole durchströmt, die der Zulaufleitung 1 entnommen und nachher in die Ablaufleitung 7 rückgeführt wird. Vom Wärmetauscher 4 wird nicht Wärme abgegeben, sondern Wärme aus der umgebenden Luft aufgenommen und an die Sole weitergeleitet, womit der Raum gekühlt wird.

Als Führungsgrösse dient wieder die Innentemperatur in einem Pilotraum, deren Grenzwert, hier der gewünschte Sollwert, am zweiten Temperaturfühler, einem Raumthermostaten, eingestellt wird. Sobald durch eine Erwärmung des Pilotraumes der Istwert der Raumtemperatur den Sollwert überschreitet, schliesst der Raumthermostat über die zweite Schaltstelle 14 den elektrischen Stromkreis 12 und die Umwälzpumpe 8 beginnt zu fördern. Unterschreitet die Raumtemperatur den eingestellten Sollwert, dann öffnet die Schaltstelle den Stromkreis und die Pumpe steht still.

Auch am ersten Temperaturfühler 10 in der Rücklaufleitung 5 wird ein Sollwert eingestellt, beispielsweise 10 °C über der Vorlauftemperatur.

Sobald der Istwert der Rücklauftemperatur den eingestellten Sollwert überschreitet, schliesst der Temperaturfühler 10 über die erste Schaltstelle 13 den Stromkreis 12 und die Pumpe 8 beginnt zu fördern. Sinkt der Istwert unter den Sollwert ab, dann öffnet die Schaltstelle 13 den Stromkreis und die Pumpe steht still.

Auch bei einer Kälteanlage kann der Raumthermostat durch einen Aussenthermostat ersetzt werden, was sogar wegen der raschen Erfassung von Änderungen der Aussentemperatur eine grössere Bedeutung als bei Heizungsanlagen hat. Ebenso kann mit Vorteil die Drehzahlregelung der Umwälzpumpe angewendet werden.

Eine Variante des Regelschemas nach Fig. 1 ergibt sich bei der Regelung eines Einrohrsystems, Fig. 2. In beiden Figuren sind gleiche Teile mit den gleichen Bezugszeichen versehen. Die Vorlaufleitung 3 und die Rücklaufleitung 5 sind zu einem Einrohrstrang vereinigt, mit dem die in den beiden Räumen 15, 16 untergebrachten Wärmetauscher 4,4' jeweils über die Zuführleitung 17 und die Abführleitung 18 in Verbindung stehen und solcherart von einem Teilstrom der Prozessflüssigkeit durchströmt werden.

Die Umwälzpumpe 8 liegt auch bei diesem Regelschema im elektrischen Stromkreis 12, doch ist nur die eine Schaltstelle 13 vorgesehen, die in der weiter oben beschriebenen Weise vom ersten Temperaturfühler 10 geschlossen und geöffnet und damit die Pumpe betätigt bzw. stillgesetzt wird. Der Temperaturfühler 10 ist im Rücklaufteil 5 des Einrohrstranges angeordnet. Die Raumtemperatur als Führungsgrösse der Regeleinrichtung wirkt direkt auf den eine Drosselvorrichtung bildenden Wasserstromteiler 19 ein, der an der Abzweigstelle der Zuführleitung 17 von der Vorlaufleitung 3 angeordnet ist und in welchen der zweite, in der Figur nicht ersichtliche Temperaturfühler integriert ist.

Für Heizungsanlagen sind solche Wasserstromteiler als automatische Heizkörperventile bekannt und im Handel erhältlich. In Abhängigkeit von der Führungsgrösse wird der Durchfluss durch den Teiler 19 und damit durch den Heizkörper mehr oder weniger gedrosselt. Bei grösserer Unterschreitung des am Teiler einstellbaren Sollwertes der Raumtemperatur ist dieses ganz geöffnet; mit ansteigender Raumtemperatur wird sein Durchtrittsquerschnitt verkleinert und es schliesst ganz, sobald die Raumtemperatur den Sollwert erreicht. Bei absinkender Raumtemperatur spielt sich der umgekehrte Vorgang ab.

Der Wasserstromteiler 19 öffnet und gibt den Durchtritt frei, bis die Raumtemperatur wieder den Sollwert erreicht hat.

Soll bei einem Einrohrsystem eine Nachtschaltung zur Absenkung der Zimmertemperatur vorgenommen werden, so wird zusätzlich der Raumthermostat 11 vorgesehen, der mit einer Schaltuhr in Verbindung steht und über die Schaltstelle 14 mit dem Stromkreis 12 wirkverbunden ist. Tagsüber ist er auf einen höheren als den Sollwert der Raumtemperatur eingestellt, der Stromkreis bleibt daher an der Schaltstelle geschlossen und die Regelung erfolgt in der oben beschriebenen Weise. Für die Nacht jedoch wird der Raumthermostat auf einen tieferen Sollwert der Raumtemperatur umgeschaltet. Demzufolge unterbricht er bei der tagsüber eingeregelten Raumtemperatur den Stromkreis und schliesst ihn erst wieder, wenn die Raumtemperatur unter den neuen Sollwert abgesunken ist, wodurch die Umwälzpumpe wieder fördert. Damit überlagert dieser Regelvorgang in der Nachtzeit die übrige Regelung, ohne dass diese verändert werden muss. Im Prinzip genügt es, wenn in einem Raum nur ein Wasserstromteiler vorgesehen wird. Die übrigen Heizkörper können in Serie geschaltet werden.

Ferner sei noch erwähnt, dass auch bei einer Einrohrheizung die zu Fig. 1 beschriebene Drehzahlregelung der Umwälzpumpe vorgenommen werden kann.

Das Einrohrsystem ist gleicherweise für Kühlanlagen verwendbar, doch muss sich die Führungsgrösse im umgekehrten Sinne auf die Drosselvorrichtung auswirken. Diese muss öffnen, wenn die Raumtemperatur ansteigt, und wieder schliessen, sobald die Raumtemperatur absinkt. Ebenso muss der Temperaturfühler in der Rücklaufleitung die Schaltstelle im Stromkreis schliessen, wenn die Rücklauftemperatur der Kältesole den eingestellten Sollwert übersteigt, und die Schaltstelle wieder öffnen bei Unterschreitung des Sollwertes.

Bei dem in Fig. 3 dargestellten Gerät bilden die Umwälzpumpe, ihr Antriebsmotor und ein Absperrventil eine bauliche Einheit. Im mehrteiligen Gehäuse 20 ist der Stator 21 des Antriebsmotors untergebracht, welcher durch den Mantel 22 gegen das Eindringen von Prozessflüssigkeit abgeschirmt ist. Der in Ruhestellung eingezeichnete, axial verschiebbare Läufer besteht im wesentlichen aus der doppeltgelagerten Welle 23, auf welcher der Naturmagnet 24, der Rotor 25 des Antriebsmotors und das Förderrad 26 der Pumpvorrichtung sitzen, dessen Endteil als Ventilteller 27 ausgebildet ist.

Der Mantel 22 ist über das Gehäuse 20 hinaus verlängert und umschliesst noch den Magnet 24. Der obere, an die Abmessung des Magnets angepasste Teil des Mantels ist vom Bügel 28 umgeben, der mit dem Zapfen 29 in der Halterung 30 drehbar gelagert ist. Das Ende des Zapfens ist als Schneckenrad 31 ausgebildet, welches über das Zahnrad 32 und das Gestänge 33 mit einem (nicht gezeichneten) Zählwerk in Verbindung steht. Auf der Halterung 30 sitzt der drehbar gelagerte Drehrichtungsanzeiger 34.

Beim Einschalten des elektrischen Stromes wird der Rotor 25 in das Magnetfeld des Stators 21 hineingezogen und somit der Läufer angehoben, worauf er zu rotieren beginnt. Der Ventilteller 27 hebt von seinem Sitz 36 im Gehäuse 20 ab und gibt den Durchtritt für die Prozessflüssigkeit frei, die in Richtung des Pfeiles 37 zuströmt und vom Förderrad 26 unter Druck in die Leitung 38, z.B. in die Vorlaufleitung der zugehörigen Anlage gefördert wird.

Der Magnet 24 und der als Schleppteil wirkende Bügel 28 bilden eine magnetische Kupplung. Sobald der Magnet angehoben wird und zu drehen beginnt, läuft auch der Schleppteil synchron mit und betätigt das Zählwerk, welches die Pumpendrehzahl, die Durchflussmenge oder die Betriebsstunden summiert, aber auch die in der Anlage umgesetzte Kalorienmenge direkt anzeigen kann.

Gleichzeitig wird der von der magnetischen Kupplung beeinflusste Drehrichtungsanzeiger 34 bis an einen Anschlag bewegt. Er dient lediglich zur Kontrolle, ob der Pumpenmotor im richtigen Drehsinn läuft, was natürlich für die Förderung der Prozessflüssigkeit eine notwendige Voraussetzung ist.

Sobald der Strom unterbrochen wird, bleibt der Läufer stehen und fällt unter dem Einfluss der Schwerkraft nach unten. Der Ventilteller 27 setzt am Ventilsitz 36 auf, er sperrt den Durchfluss der Prozessflüssigkeit ab und das Zählwerk bleibt stehen.

Wenn die Pumpe auch bei nicht senkrechter, sondern beispielsweise horizontaler Lage der Welle 23 betrieben werden soll, dann genügt es, z.B. innerhalb des Mantels 22, und zwar zwischen dem Rotor 25 und dem Gehäusedeckel 39 eine Schraubenfeder einzubauen. Diese muss derart dimensioniert sein, dass sie die Schliessbewegung des Ventiltellers bei Unterbrechung des Stromes verlässlich besorgt, jedoch der Bewegung des Rotors 25 in das Magnetfeld des Stators 21 beim Einschalten des Stromes keinen zu grossen Widerstand entgegensetzt.

Der Vollständigkeit halber sei noch erwähnt, dass die anhand der Fig. 1 und 2 beschriebenen Verfahren selbstverständlich auch mit Einzelaggregaten, nämlich mit Pumpe, Antriebsmotor und Absperrventil, durchgeführt werden können.

Bezeichnungsliste
1. Leitung (Vorlauf)
2. Abzweigung
3. Vorlaufleitung
4. Wärmeaustauscher
4'. Wärmeaustauscher
5. Rücklaufleitung
6. Punkt der Zurückführung
7. Ablaufleitung
8. Umwälzpumpe
9. Zählwerk
10. Temperaturfühler (Rücklauf)
11. Raumthermostat (Temperaturfühler)
12. Stromkreis elektrisch
13. Schaltsteller
14. Schaltstelle
15. Raum
16. Raum
17. Zufuhrleitung
18. Abfuhrleitung
19. Wasserstromteiler
20. Gehäuse
21. Stator
22. Mantel
23. Welle
24. Naturmagnet
25. Rotor
26. Förderrad
27. Ventilteller
28. Bügel
29. Zapfen
30. Halterung
31. Schneckenrad
32. Zahnrad
33. Gestänge
34. Drehrichtungsanzeiger
35. –
36. Sitz
37. Pfeil (Richtung)
38. Leitung

**Patentansprüche**

1. Verfahren zur Regelung einer thermischen Anlage unter gleichzeitiger Erfassung der umgesetzten Wärmemenge, bestehend wenigstens aus einem von einer im Kreislauf geführten Prozessflüssigkeit durchströmten thermischen Regenerator zur Aufrechterhaltung einer einstellbaren Vorlauftemperatur der Prozessflüssigkeit, aus mindestens einem über eine Vorlauf- und eine Rücklaufleitung mit dem Regenerator verbundenen, von der Prozessflüssigkeit durchströmten Wärmetauscher, und aus einer in einer der beiden Leitungen angeordneten Umwälzpumpe, deren Antriebsmotor in einem elektrischen Stromkreis liegt, wobei der Durchfluss durch den Wärmetauscher (4,4') geregelt wird von einer temperaturabhängigen Führungsgrösse und vom Istwert der Rücklauftemperatur der Prozessflüssigkeit, dieser Istwert über eine erste Schaltstelle (13) auf den Stromkreis (12) der Umwälzpumpe (8) im Sinne eines Unterbrechens und Schliessens desselben zur Aufrechterhaltung eines vorbestimmbaren Sollwertes der Rücklauftemperatur einwirkt, die Summe der Umdrehungen der Umwälzpumpe (8) innerhalb eines wählbaren Zeitabschnittes zur Lieferung eines Masses für die im Wärmetauscher (4,4') in diesem Zeitabschnitt umgesetzte Wärmemenge herangezogen wird, und die Umwälzpumpe (8) nur fördern kann, wenn der Stromkreis (12) geschlossen ist.

2. Verfahren nach Anspruch 1, dadurch gekennzeichnet, dass die Führungsgrösse über eine zweite Schaltstelle (14) auf den Stromkreis (12) der Umwälzpumpe (8) im Sinne eines Unterbrechens und Schliessens desselben einwirkt.

3. Verfahren nach Anspruch 1, dadurch gekennzeichnet, dass der Durchfluss durch den Wärmetauscher (4,4') in Abhängigkeit von der Führungsgrösse gedrosselt wird.

4. Verfahren nach Anspruch 1, dadurch gekennzeichnet, dass eine Raumtemperatur die Führungsgrösse bildet.

5. Verfahren nach Anspruch 1, dadurch gekennzeichnet, dass die Aussentemperatur die Führungsgrösse bildet.

6. Verfahren nach Anspruch 4 und 5, dadurch gekennzeichnet, dass die Temperaturdifferenz zwischen dem Sollwert der Raumtemperatur und der Aussentemperatur die Führungsgrösse bildet.

7. Verfahren nach Anspruch 1, dadurch gekennzeichnet, dass der Sollwert der Rücklauftemperatur der Prozessflüssigkeit durch eine konstante Differenz zur Vorlauftemperatur bestimmt wird.

8. Verfahren nach Anspruch 4, 5 oder 6, dadurch gekennzeichnet, dass die Drehzahl der Umwälzpumpe (8) in Abhängigkeit von der Führungsgrösse geregelt wird.

9. Verfahren nach Anspruch 6 und 8, dadurch gekennzeichnet, dass die Drehzahl der Umwälzpumpe (8) in Abhängigkeit von der Temperaturdifferenz zwischen der Aussentemperatur und dem Sollwert der Raumtemperatur geregelt wird.

10. Verfahren nach Anspruch 8, dadurch gekennzeichnet, dass die Drehzahl der Umwälzpumpe (8) in Abhängigkeit von der Temperaturdifferenz zwischen dem Ist- und dem Sollwert der Raumtemperatur geregelt wird.

11. Verfahren nach Anspruch 8, dadurch gekennzeichnet, dass die Drehzahl der Umwälzpumpe (8) in Abhängigkeit von der Temperaturdifferenz zwischen der Vorlauftemperatur der Prozessflüssigkeit und der Rücklauftemperatur geregelt wird.

12. Verfahren nach Anspruch 1, dadurch gekennzeichnet, dass bei Stillstand der Umwälzpumpe (8) der Durchfluss der Prozessflüssigkeit abgesperrt wird.

13. Einrichtung zur Durchführung des Verfahrens nach Anspruch 1, mit einem ersten Temperaturfühler (10) in der Rücklaufleitung (5), welcher auf die erste Schaltstelle (13) im Stromkreis (12) der Umwälzpumpe (8) einwirkt, sobald der Istwert der Rücklauftemperatur von einem vorbestimmbaren Sollwert abweicht, mit einem zweiten Temperaturfühler (11), welcher auf den Durchfluss durch den Wärmetauscher (4,4') einwirkt, sobald die Führungsgrösse von einem festlegbaren Grenzwert abweicht, und mit einem mit der Umwälzpumpe (8) in Verbindung stehenden Zählwerk (9) zur Bestimmung der im Wärmetauscher (4,4') umgesetzten Wärmemenge.

14. Einrichtung nach Anspruch 13, dadurch gekennzeichnet, dass der zweite Temperaturfühler (11) über die zweite Schaltstelle (14) im Stromkreis (12) der Umwälzpumpe (8) diese und damit den Durchfluss durch den Wärmetauscher (4,4') ein- und ausschaltet.

15. Einrichtung nach Anspruch 13, gekennzeichnet durch eine vom zweiten Temperaturfühler gesteuerte Drosselvorrichtung (19), welche den Durchfluss durch den Wärmetauscher (4,4') regelt.

16. Einrichtung nach Anspruch 13, dadurch gekennzeichnet, dass die Umwälzpumpe (8), ihr Antriebsmotor (21, 25) und ein Absperrventil (26, 36) für die Prozessflüssigkeit eine bauliche Einheit bilden.

17. Einrichtung nach Anspruch 16, dadurch gekennzeichnet, dass der axial verschiebbare Läufer (23) der Umwälzpumpe (8) bei Stillstand den Durchfluss der Prozessflüssigkeit absperrt.

18. Einrichtung nach Anspruch 17, dadurch gekennzeichnet, dass ein Förderrad (26) der Umwälzpumpe (8) den Ventilteller (27) des Absperrventils bildet.

19. Einrichtung nach Anspruch 17, gekennzeichnet durch eine magnetische Kupplung, deren Magnet (24) auf dem Pumpenläufer (23) sitzt und deren Schleppteil (28) mit einem Zählwerk (9) in Verbindung steht.

20. Einrichtung nach Anspruch 19, gekennzeichnet durch einen von der magnetischen Kupplung (24, 28) bewegten Drehrichtungs-Anzeiger (34).

21. Verwendung der Einrichtung nach Anspruch 13 für eine mehrstöckige Anlage, dadurch gekennzeichnet, dass in jedem Stockwerk für jede Wohneinheit eine solche Einrichtung vorgesehen ist, deren Vor- und Rücklaufleitungen (3, 5) an je eine gemeinsame Ablaufleitung (1) vom bzw. Zulaufleitung (7) zum thermischen Regenerator angeschlossen sind.

**Revendications**

1. Procédé pour le réglage d'une installation thermique par enregistrement simultané de la quantité de chaleur déplacée, composée d'au moins un régénérateur thermique, dans le circuit duquel passe le liquide du processus, régénérateur destiné au maintien d'une température d'alimentation réglable de ce même liquide, d'au moins un échangeur de chaleur, irrigué par le liquide du processus et, par une conduite d'alimentation et de retour, relié au régénérateur, et d'une pompe de recirculation installée sur une des conduites, pompe dont le moteur de commande se trouve dans un circuit électrique; procédé caractérisé par le fait que l'écoulement par l'échangeur de chaleur (4,4') est réglé par une grandeur de commande dépendant de la températur et par une valeur effective de la température de retour du liquide du processus, cette valeur effective influençant le circuit électrique (12) de la pompe de recirculation (8) par un premier poste de commutation (13), dans le sens d'interrompre et de fermer ce circuit électrique, pour le maintien d'une valeur théorique prédéterminable de la température de retour, de telle sorte que la somme des rotations de la pompe de recirculation (8), à l'intérieur d'un laps de temps choisi, soit mise à contribution pour la livraison d'une mesure pour la quantité de chaleur convertie dans l'échangeur de chaleur (4,4') et que la pompe de recirculation (8) ne peut refouler que si le circuit électrique (12) est fermé.

2. Procédé selon spécification 1, caractérisé par le fait que la grandeur de commande, par un second poste de sollicitation (14), influence le circuit électrique (12) de la pompe de recirculation (8) dans le but de l'interrompre et de le refermer.

3. Procédé selon spécification 1, caractérisé par le fait que l'écoulement par l'échangeur de chaleur (4,4') sera réduit sous la dépendance de la grandeur de commande.

4. Procédé selon spécification 1, caractérisé par le fait que la température de la chambre constitue la grandeur de commande.

5. Procédé selon spécification 1, caractérisé par le fait que la température extérieure constitue la grandeur de commande.

6. Procédé selon spécifications 4 et 5, caractérisé par le fait que la différence de température entre la valeur assignée de la température de la chambre et la température extérieure constitue la grandeur de commande.

7. Procédé selon spécification 1, caractérisé par le fait que la valeur assignée de la température de retour du liquide du processus est déterminée par une différence constante avec la température d'alimentation.

8. Procédé selon spécifications 4, 5 ou 6, caractérisé par le fait que le nombre de tours de la pompe de recirculation (8) est réglé en fonction de la grandeur de commande.

9. Procédé selon spécification 6 et 8, caractérisé par le fait que le nombre de tours de la pompe de recirculation (8) est réglé en fonction de la différance de température entre la température extérieure et la valeur assignée de la température de la chambre.

10. Procédé selon spécification 8, caractérisé par le fait que le nombre de tours de la pompe de recirculation (8) est réglé en fonction de la différence de température entre la valeur effective et la valeur assignée de la température de la chambre.

11. Procédé selon spécification 8, caractérisé par le fait que le nombre de tours de la pompe de recirculation (8) est réglé en fonction de la différence de température entre la température d'alimentation du liquide du processus et la température de retour.

12. Procédé selon spécification 1, caractérisé par le fait que l'écoulement du liquide du processus est interrompu lorsque la pompe de recirculation (8) demeure immobile.

13. Equipement pour l'exécution du procédé selon spécification 1, avec une première sonde de température (10) dans la conduite de retour (5), laquelle influence le premier poste de commutation (13) sur le circuit électrique (12) de la pompe de recirculation (8) dès que la valeur effective de la température de retour s'écarte d'une valeur assignée déterminable à l'avance par une seconde sonde de température (11), laquelle influence l'écoulement par l'échangeur de chaleur (4,4') dès que la grandeur de commande s'écarte d'une valeur limite définissable et, par un compteur (9), installé en relation avec la pompe de recirculation (8) détermine la quantité de chaleur convertie dans l'échangeur de chaleur (4,4').

14. Equipement selon spécification 13, caractérisé par le fait que la seconde sonde de température (11) enclenche ou déclenche, par un second poste de commutation (14), le circuit électrique (12) de la pompe de recirculation (8) et de ce fait ouvre et ferme l'écoulement par l'échangeur de chaleur (4,4').

15. Equipment selon spécification 13, caractérisé par une des deux sondes de température commandant le répartisseur du courant d'eau (19), lequel règle l'écoulement par l'échangeur de chaleur (4,4').

16. Equipement selon spécification 13, caractérisé par le fait que la pompe de recirculation (8), son moteur de commande (21, 25) et une soupape d'arrêt (27, 36) pour le liquide du processus constituent une unité de construction.

17. Equipement selon spécification 16, caractérisé par le fait que l'arbre (23), coulissant de façon axiale, de la pompe de recirculation (8) lorsqu'elle est immobile, interrompt l'écoulement du liquide du processus.

18. Equipement selon spécification 17, caractérisé par le fait que la roue de refoulement (26) de la pompe de recirculation (8) constitue la tête de soupape (27) de la soupape d'arrêt.

19. Equipement selon spécification 17, caractérisé par un dispositif d'accouplement magnétique, dont l'aimant (24) se trouve sur l'arbre de la pompe (23) et dont l'archet (28), se trouve en relation avec le compteur (9).

20. Equipement selon spécification 19, caractérisé par un indicateur du sens de marche (34), mis en mouvement par un dispositif d'accouplement (24, 28).

21. Application de l'équipement selon spécification 13, pour une installation conçu pour plusieurs étages, caractérisée par le fait qu'à chaque étage, pour chaque unité d'habitation est prévue une telle installation, dont les conduites d'alimentation et de retour (3, 5) sont reliées chacune à une conduite de vidange commune (1) de la conduite de décharge (7) du régénérateur thermique.

## Claims

1. Procedure for controlling a thermal installation and at the same time measuring the amount of heat consumed, consisting of at least one thermal regenerator through which circulates a process liquid for the purpose of maintaining an adjustable supply temperature of the process liquid, of at least one heat exchanger through which the process liquid circulates connected to the regenerator by a supply pipe and a return pipe, and one circulating pump located in one or other of the two pipes whose driving motor is part of an electric circuit, and characterized by the fact that the flow through the heat exchangers (4,4') is controlled by a temperature-dependent reference value and by the actual value of the return temperature of the process liquid, whereby this actual value influences the electric current (12) of the circulation pump (8) in the sense of an interruption and closing by way of the first switching position (13), that the sum of the turns of the circulation pump (8) within a selectable time period is utilized for obtaining a measure for the amount of heat converted by the heat exchangers (4,4') within this same time period, and that the circulation pump (8) can only pump when the electric circuit (12) is closed.

2. Procedure according to claim 1, characterized by the fact that the reference value influences by way of a second switching position (14) the electric circuit (12) of the circulation pump (8) in the sense of an interruption and closing.

3. Procedure according to claim 1, characterized by the fact that the flow through the heat exchangers (4,4') can be throttled dependent upon the reference value.

4. Procedure according to claim 1, characterized by the fact that the temperature of a particular room is taken as the reference value.

5. Procedure according to claim 1, characterized by th fact that the external temperature is taken as the reference value.

6. Procedure according to claims 4 and 5, characterized by the fact that the temperature difference between the set value of the room temperature and the external temperature forms the reference value.

7. Procecure according to claim 1, characterized by the fact that the set value of the return temperature of the process liquid is determined by a constant difference from the supply temperature.

8. Procedure according to claims 4, 5 or 6, characterized by the fact that the speed of the circulation pump (8) is controlled dependent upon the reference value.

9. Procedure according to claims 6 and 8, characterized by the fact that the speed of the circulation pump (8) is controlled dependent upon the temperature difference between the external temperature and the set value of the room temperature.

10. Procedure according to claim 8, characterized by the fact that the speed of the circulation pump (8) is controlled dependent upon the temperature difference between the actual and set values of the room temperature.

11. Procedure according to claim 8, characterized by the fact that the speed of the circulation pump (8) is controlled dependent upon the temperature difference between the supply temperature of the process liquid and the return temperature.

12. Procedure according to claim 1, characterized by the fact that when the circulation pump (8) is not operating the flow of the process liquid is shut off.

13. Arrangement for carrying out the procedure according to claim 1, characterized by a first temperature sensor (10) in the return flow pipe (5), which influences the first switching position (13) in the electric circuit (12) of the circulation pump (8) as soon as the actual value of the return temperature deviates from a predeterminable set value through a second temperature sensor (11) which influences the flow through the heat exchangers (4,4') as soon as the reference value deviates from a definable limiting value, and a counter (9) connected to the circulation pump (8) for determining the amount of heat converted in the heat exchangers (4,4').

14. Arrangement according to claim 13, characterized by the fact that the second temperature sensor (11) by way of switching position (14) in the electric circuit (12) of the circulation pump (8) switches the pump on and off and thereby controls the flow through the heat exchangers (4,4').

15. Arrangement according to claim 13, characterized by a throttling device (19), controlled by the second temperature sensor, which regulates the flow through the heat exchangers (4,4').

16. Arrangement according to claim 13, characterized by the fact that the circulation pump (68), the driving motor (21, 25) and the check valve (27, 36) form a modular unit for the process liquid.

17. Arrangement according to claim 16, characterized by the fact that the axially movable shaft (23) of the circulation pump (8) shuts off the flow of the process liquid when the pump is not operating.

18. Arrangement according to claim 17, characterized by the fact that a pump wheel (26) of the circulation pump (8) forms the valve disk (27) of the check valve.

19. Arrangement according to claim 19, characterized by a magnetic coupling whose magnet (24) is located on the shaft (23) and whose puller (28) is connected to a counter (9).

20. Arrangement according to claim 19, characterized by a rotation indicator (34) driven by a magnetic coupling (24, 28).

21. Application of arrangement according to claim 13 for an installation on several floors, characterized by the fact that such an arrangement is provided on each floor for each residential unit; the supply and return pipes (3, 5) each being connected to a common drain pipe (7) from, or supply pipe (1) to, the thermal regenerator.

*1/2*

# FIG.1

# FIG.2

2/2

# FIG. 3

13